Europäisches Patentamt

European Patent Office

Office européen des brevets

(11) Publication number: **0 508 208 A1**

## EUROPEAN PATENT APPLICATION

(21) Application number: **92105068.8**

(22) Date of filing: **24.03.92**

(51) Int. Cl.⁵: **B23Q 11/00**

(30) Priority: **08.04.91 JP 22756/91 U**

(43) Date of publication of application:
**14.10.92 Bulletin 92/42**

(84) Designated Contracting States:
**CH DE LI**

(71) Applicant: **SEIKO SEIKI KABUSHIKI KAISHA**
**3-1, Yashiki 4-chome**
**Narashino-shi Chiba(JP)**

(72) Inventor: **Kubota, Minoru**
**c/o Seiko Seiki K.K., 3-1, Yashiki 4-chome**
**Narashino-shi, Chiba(JP)**

(74) Representative: **Fleuchaus, Leo, Dipl.-Ing. et al**
**Melchiorstrasse 42**
**W-8000 München 71(DE)**

(54) **Automatic lathe with sliding headstock.**

(57) An automatic lathe with sliding headstock (22) in which chips (30) created during cutting of a work do not accumulate on a tool rest (4) for mainly drilling or on a basal part of a base (3) on which the tool rest (4) is mounted. The tool rest (4), a table (9) and a slider (11) are slanted from the horizontal surface and are mounted so that the chips (30) created during machining of the work and scattered around the tool rest (4) and the table (9) are guided into a coolant tank (5) through a chute opening (7). Moreover, the base (3) is mounted not on a downward perpendicular (21a) of a spindle (21) or a headstock (22) but on the side where the tool rest (4) faces in the upper diagonal direction, avoiding the chute opening (7) on a upper leg surface (1a) which is linked with the coolant tank (5) to prevent the chips (30) falling on the tool rest (4) and the table (9) from accumulating on the basal part of the base (3).

FIG. 2

## BACKGROUND OF THE INVENTION

### 1. Field of the Invention

The present invention relates to an automatic lathe with sliding headstock and more particularly to an automatic lathe with sliding headstock having a tool rest provided on a leg upper surface, a guide bash provided on the tool rest and a headstock for chucking a long cylindrical work guided by the guide bush to rotate and slide in the axial direction.

### 2. Description of the Prior Art

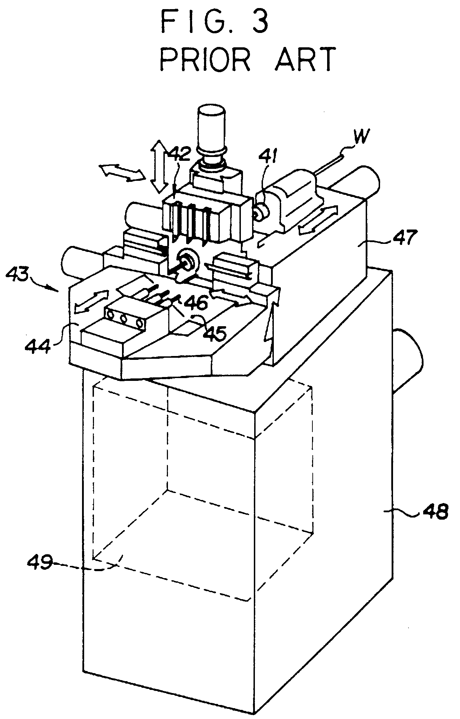

In a prior art automatic lathe with sliding headstock, a base 47 is provided on a leg 48 as shown in Fig. 3. A first tool rest 42 for cutting a side of a work w chucked by a spindle 41 is provided on the base 47 and a second tool rest 43 for machining an end face of the work w is mounted keeping its upper surface 44 in horizontal state.

This tool rest 43 is so called a drilling attachment and about 3 to 4 drilling tools 46 are mounted. A chute opening 45 for chuting chips created during cutting of the work w is formed at corresponding position below the tools 46. A coolant tank 49 for storing the chips is contained within the leg 48 of the tool rest 41.

In the prior automatic lathe with sliding headstock structured as described above, however, the second tool rest 43 is mounted to the base 47 while keeping its upper surface 44 horizontal, so that though the chips that fall right below are stored in the coolant tank 49 passing through the chute opening 45, the chips that scatter around the chute opening 45 gradually accumulate on the upper surface 44 of the tool rest during cutting of the work w because the upper surface 44 of the tool rest is horizontal.

Due to that, there have been such problems that the tool rest 43 may malfunction due to the accumulated chips, the chips may not separate from the work w thereby causing defective machining and a large amount of chip may induce thermal deformation thereby causing defective machining accuracy.

The aforementioned chips often scatter and accumulate also on the basal part of the base 47 which supports the tool rest 43 thereby causing such problems as defective machining accuracy and others by the same reason as above.

## SUMMARY OF THE INVENTION

It is an object of the present invention to provide an automatic lathe with sliding headstock which is adapted so that no such troubles as the malfunction and defective machining are caused by preventing the chips created during cutting of the work from accumulating on the tool rests and the basal part of the base.

In order to achieve the aforementioned object, an automatic lathe with sliding headstock of the present invention having a tool rest provided on a leg upper surface, a guide bush provided on the tool rest and a headstock for chucking a long cylindrical work guided by the guide bush to rotate and to slide in the axial direction is characterized in that a second tool rest for mainly drilling which is located in front of the tool rest is slanted from the horizontal surface and is mounted so that chips created during machining of the work are guided into a coolant tank through a chute opening provided on the leg upper surface and that a mounting surface for mounting the second tool rest is not on a downward perpendicular of the headstock but is located on the side where the second tool rest faces in the upper diagonal direction, avoiding the chute opening on the leg upper surface linked with the coolant tank.

By structuring as described above, since the second tool rest is slanted from the horizontal surface to guide the chips created during machining of the work into the coolant tank and the mounting surface for mounting the second tool rest is not on the downward perpendicular of the headstock but is located on the side where the second tool rest faces in the upper diagonal direction, dischargeability of the chips is improved and places where the chips can stay are eliminated, thereby allowing the troubles caused by the chips to be avoided.

## BRIEF DESCRIPTION OF THE DRAWINGS

Fig. 1 is a front view showing an appearance of one embodiment of an automatic lathe with sliding headstock according to the present invention;

Fig. 2 is a section view along II-II line in Fig. 1; and

Fig. 3 is a perspective view illustrating one example of a conventional automatic lathe with sliding headstock.

## DETAILED DESCRIPTION OF THE PREFERRED EMBODIMENTS

Referring now to the drawings, an embodiment of an automatic lathe with sliding headstock of the present invention will be explained.

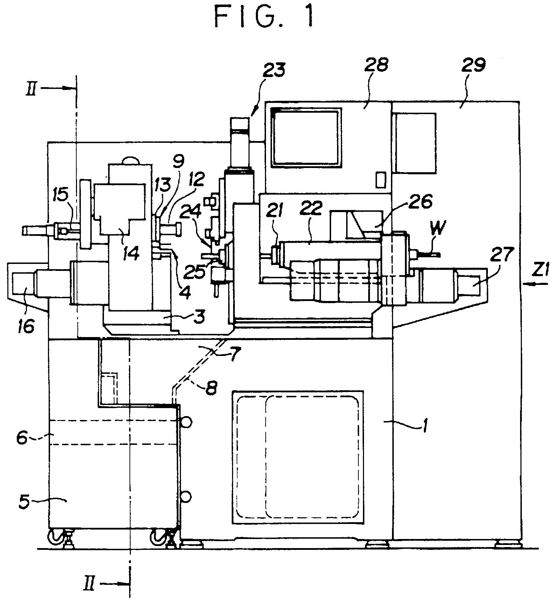

The automatic lathe with sliding headstock is structured having such an appearance as shown in Fig. 1, wherein a main spindle 21 for chucking a work w and for sliding in the direction of Z1 in the figure, a headstock 22 for supporting the main spindle 21 and a comb-shape tool rest (including a radial tool rest) 23 for machining a side of the work w chucked by the spindle 21 are provided on an upper surface 1a of a leg 1 and a base 3 is provided on a side opposite to the tool rest 23, i.e. on a side of an end face of the work w to be machined. A tool rest 4 for drilling the front end face of the work w as a second tool rest is provided on the base 3 and three fixed tools 4a through 4c are mounted on the upper surface thereof.

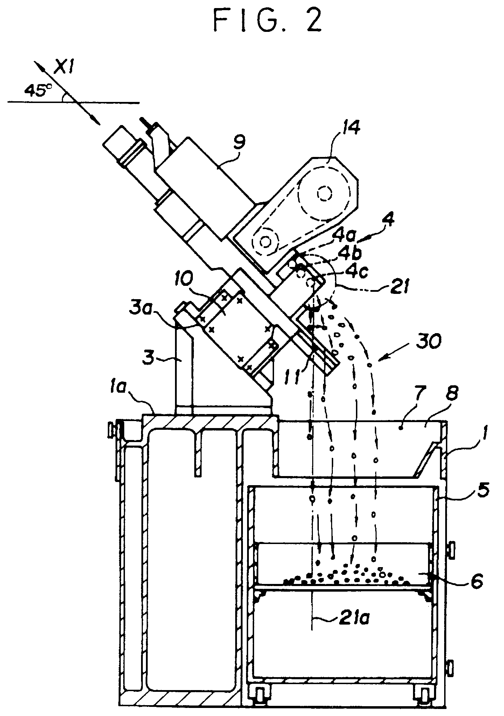

Fig. 2 is a section view along II-II line in Fig. 1 wherein a chute opening 7 is formed on the leg upper surface 1a at a corresponding position below a machining point of the work w and a coolant tank 5 for accumulating and discharging chips 30 created during machining of the work w is installed below the chute opening 7. The coolant tank 5 may be removed out of the leg 1. A chip receiver 6 for receiving chips 30 during machining of the work w is provided within the coolant tank 5 to strain machining oil. A guide plane 8 slanted for guiding the aforementioned chips 30 to the coolant tank 5 is formed within the chute opening 7 (see Fig. 1).

Moreover, as shown in Fig. 2, a slant 3a slanted in the direction of X1 which is slanted by angle of 45° from the horizontal direction, i.e. from the leg upper surface 1a, is formed. The mounting surface of the base 3 is on the leg upper surface 1a, but not on a downward perpendicular 21a of the main spindle 21 or the headstock 22 and is provided on the side where the tool rest 4 faces in the upper diagonal direction avoiding the chute opening 7 on the leg upper surface 1a which is linked with the coolant tank 5. A table 9 is provided on the slant 3a of the base 3 through intermediary of a guide stage 10 and a slider 11 and is structure so that it can move in the directions of Z1 (see Fig. 1) and X1. The aforementioned tool rest 4 is mounted on the table 9.

Beside the tool rest 4, as shown in Fig. 1, a back spindle 12, a back headstock 13, a back spindle rotating mechanism 14 for rotating the back spindle 12 and a cylinder 15 for selecting one tool among the tools 4a through 4c on the tool rest 4 and for moving it in the direction toward work w by hydraulic control are provided on the slider 11.

On the work w side of the leg upper surface 1a in Fig. 1, a turret tool rest 24 for machining the work w, a guide bush 25, a position coder 26 and a sliding mechanism 27 for sliding the main spindle 21 in the Z1 direction are provided. The reference numeral 28 in Fig. 1 denotes a manipulation box, numeral 29 a control box in which a NC device is contained and numeral 16 a sliding mechanism for sliding the back spindle 12 in the Z1 direction.

Then assume here that the work w is machined by the tool 4c as shown in Fig. 2 in the automatic lathe with sliding headstock constructed as described above and that chips 30 are created and scattered as shown in the figure.

At this time, the chips 30 that fall almost right below are guided by the guide plane 8 through the chute opening 7 and are stored into the coolant tank 5.

On the other hand, the chips 30 that scatter around during machining of the work w and fall on the tool rest 4, the table 9 and the slider 11 fall into the coolant tank 5 rolling or sliding on the tool rest 4 and the table 9 since the tool rest 4, table 9 and the slider 11 are mounted by being slanted to the chute opening 7, thereby accumulating no chips on the tool rest 4, table 9 and others and improving dischargeability of the chips on the tool rest 4 and others.

Moreover, since the base 3 on the leg upper surface 1a is not on the downward perpendicular 21a of the spindle 21 or the headstock 22 but is mounted on the side where the tool rest 4 faces in the upper diagonal direction avoiding the chute opening 7 of the leg upper surface 1a which is linked with the coolant tank 5, the chips created during machining of the work w hardly accumulate also around the basal part of the base 3, thereby improving dischargeability of the chips around the basal part of the base 3.

Therefore, according to the present invention, the chips hardly accumulate on the tool rest 4 and also around the basal part of the base, so that the dischargeability of the chips is improved and such troubles as malfunction of the tool rest due to the chips accumulated on the tool rest and defective machining caused by chips which do not separate from the work are eliminated, thereby improving machining accuracy.

Since the tool rest 4 and the table 9 for supporting the tool rest 4 and the slider 11 are mounted by being slanted by 45° in the present embodiment, a sliding mechanism 14 such as a motor and others for sliding the tool rest 4 is also disposed by being slanted by the same angle. Due to that, the width of the lathe in the horizontal direction becomes short and visibility in the horizontal direction of the tool rest 4 is improved for an operator.

Although the tool rest and others are mounted by being slanted by 45° in the present embodiment, they may be of course mounted by slanting by appropriate angle other than 45° according to the present invention.

As described above, according to the present invention the second tool rest for mainly drilling is slanted toward the chute opening and is mounted so that chips created during machining of a work are guided into the coolant tank, so that the chips scattered on the tool fall from the tool rest and are stored into the coolant tank without accumulating on the upper surface of the tool rest. Moreover, the mounting surface for mounting the second tool rest is not on the downward perpendicular of the headstocks but is located on the side where the second tool rest faces in the upper diagonal direction, so that the chips hardly accumulate also around the basal part of the base, thereby improving dischargeability of the chips.

Due to that, the dischargeability of the chips is improved and such troubles as malfunction of the tool rest due to the chips accumulated on the upper surface of the tool rest and defective machining caused by chips which do not separate from the work are eliminated, thereby improving machining accuracy.

**Claims**

1. An automatic lathe with sliding headstock comprising:

a first tool rest provided on a leg upper surface of the automatic lathe;

a headstock for chucking a long cylindrical work to rotate and to slide in the axial direction; and

a second tool rest for mainly drilling the work which is located in front of said tool rest being slanted from the horizontal surface and mounted so that chips created during machining of the work are guided into a coolant tank through a chute opening provided on said leg upper surface and that a mounting surface for mounting said second tool rest is provided apart from downward perpendicular of said headstock and is located on the side where said second tool rest faces in the upper diagonal direction avoiding said chute opening on the leg upper surface linked with said coolant tank.

# FIG. 1

# FIG. 2

# FIG. 3
## PRIOR ART

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-1 602 942 (PRONTOR)<br>* page 4, paragraph 1; figure 1 *<br>--- | 1 | B23Q11/00 |
| A | DE-C-601 210 (MAGDEBURGER)<br>* page 3, line 19 - page 3, line 47 *<br>--- | 1 | |
| A | GB-A-904 219 (PROGRES)<br>* claim 3 *<br>--- | 1 | |
| A | FR-A-1 550 388 (AUTOMATISME)<br>* page 2, right column, paragraph 2 - page 2, right column, paragraph 3 *<br>----- | 1 | |
| | | | TECHNICAL FIELDS SEARCHED (Int. Cl.5 ) |
| | | | B23Q |

The present search report has been drawn up for all claims

| Place of search | Date of completion of the search | Examiner |
|---|---|---|
| THE HAGUE | 14 JULY 1992 | DE GUSSEM J. L. |

EPO FORM 1503 03.82 (P0401)